# EUROPEAN PATENT APPLICATION

(11) **EP 1 580 590 A1**
(43) Date of publication of application: **28.09.2005**
(21) Application number: 05102342.2
(22) Date of filing: 23.03.2005
(51) Int. Cl.: G02C 5/22

(54) **Elastic hinge for eye-glasses temple bars**

(30) Priority: 24.03.2004 IT BL20040003 P
(71) Applicant: Kacavenda, Cvijeta, Banja Luka (BA)
(72) Inventor: Kacavenda, Cvijeta, Banja Luka (BA)
(74) Representative: Faggioni, Carlo Maria

(57) **Abstract**

An elastic hinge for eye-glasses is disclosed, of the type comprising elastic opposition means placed between a hinge half-portion integral with the eye-glasses frontpiece (F) and a second hinge half-portion integral with an eye-glasses temple bar (A), said elastic opposition means comprising at least one slider (30, 21, 32) sliding within the temple bar whereto a plate (33) is made integral, which plate is arranged on the external side of the temple bar (A).

## Description

### Field of the invention

The present invention relates to an elastic hinge for eye-glasses, in particular to a hinge equipped with elastic means apt to provide a bias action upon opening and closing of the temple bars with respect to the frame frontpiece.

### BACKGROUND ART

As known, the provision of elastic means in the hinges of a pair of eye-glasses joining the temple bars to the frontpiece have the purpose of making it safer and more pleasant to open and close the temple bars, when the eye-glasses need to be worn or put away, as well as of ensuring a better adherence thereof to the wearer's temples.

A number of technical solutions for elastic hinges of eye-glasses temple bars are known, which all generally encompass mounting an abutting element which is movable within the temple bar end and lies between the two frame parts joining in the hinge - i.e. between the hinge half integral with the temple bar and the hinge half integral with the frontpiece - through opposing elastic means.

Purely by way of example, reference can be made to the solutions disclosed in EP 91573 or EP 262099.

The approach of known systems, however, is based on the elastic hinge components remaining hidden from view as far as possible. This implies a series of complications and construction constraints, connected with the need to keep all the members contributing to the elastic function of the hinge within the eye-glasses temple bars or frontpiece.

The Applicant instead has intended to go beyond this type of approach, to supply an eye-glasses hinge partly free from the above constraints, simpler and cheaper to manufacture and suitable to achieve further advantageous results.

It is hence an object of the present invention to supply an improved elastic hinge wherein the slider of the opposing elastic means can partly remain outside the eye-glasses temple bar.

Another important object of the present invention is to always achieve reliable limitation of maximum spreading of the temple bars notwithstanding hinge construction simplicity.

A further object of the invention is to exploit the linear movement of the slider to achieve the movement of an external plate which provides the same temple bar and hence the pair of eye-glasses with a peculiar and innovative aesthetic effect.

### SUMMARY OF THE INVENTION

This and other objects are achieved by a hinge as described in its essential features in the accompanying claims.

In particular, a feature of the invention is to provide an external plate on the temple bars which is integrally connected to a sliding cursor or slider belonging to the elastic opposing means of the hinge, said plate performing a visible movement and axially corresponding to the hidden movement of the slider upon each rotation of the temple bars.

### BRIEF DESCRIPTION OF THE DRAWINGS

Further features and advantages of the hinge according to the invention will in any case become evident from the following detailed description of a preferred embodiment of the invention, given by way of example and illustrated in the accompanying drawings, wherein:

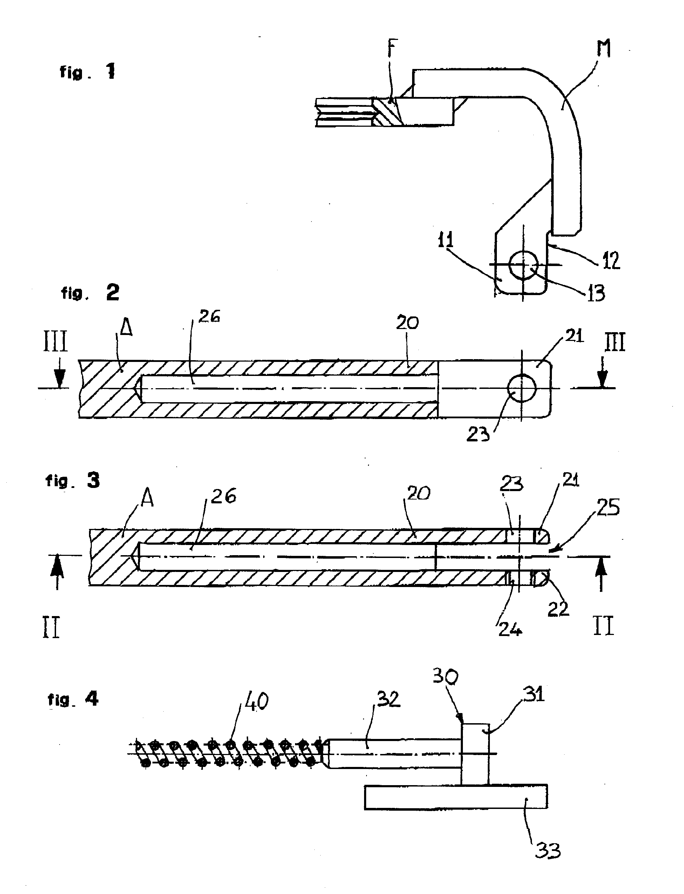

fig. 1 is an interrupted top view, partly in a cross-section, of an eye-glasses frontpiece complete with its hinge half-portion;

fig. 2 is an interrupted cross-section view, taken along line II-II of fig. 3, of an exemplary temple bar;

fig. 3 is an interrupted cross-section view, taken along line III-III of fig. 2;

fig. 4 is a top view of a slider according to the invention equipped with a spring, to be mounted within a temple bar as in figs. 2 and 3;

fig. 5 is a top view, partly in a cross-section, of a full hinge according to the invention, with the temple bar in a closed position on the frontpiece;

fig. 6 is a similar view to that of fig. 5, with the temple bar shown in a partially open position;

fig. 7 is a view similar to that of fig. 5, with the temple bar shown in a normally open position;

fig. 8 is a view similar to that of fig. 5, with the temple bar shown in an excessively wide open position.

### DESCRIPTION OF A PREFERRED EMBODIMENT

In all the figures the same elements are referred to by the same reference numbers.

An eye-glasses frame comprises, in a manner known per se, a frontpiece F whereto a pair of temple bars A are joined. In particular, frontpiece F has a pair of side supports M (the drawings always show one side support only) which end with a hinge half-portion 11 provided with a respective hole 13 on the hinge axis. Correspondingly, each of the temple bars comprises, at a proximal end 20, the other hinge half-portion consisting of a pair of forks 21 and 22 equipped with holes, 23 and 24 respectively, on the hinge axis.

The hinge half-portion 11 of the frontpiece is mounted offset from side support M, so as to form a recess 12.

The opposing holes of the pair of forks 21, 22 can, according to known prior art, be a smooth through-hole 23 and a threaded through-hole 24, respectively, in order to secure a small pin 41 thereto for hinge pivoting.

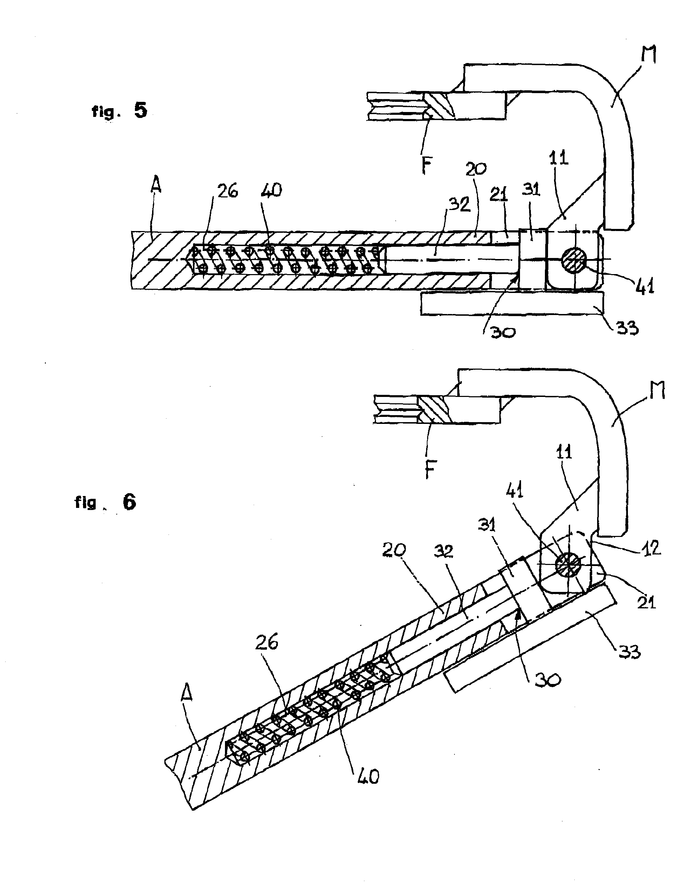

According to the invention, between the two forks 21 and 22 of each temple bar, an intermediate compartment 25 is provided, open on both sides (as can be seen by viewing figs. 2 and 3) and extending to a certain length, at least equal to the working travel of the elastic opposing means, as will be further detailed below.

The same end 20 of temple bar A also comprises an axial hole 26 for the housing of said elastic opposing means.

With reference to fig. 4, the elastic opposing means are described. A slider 30 consists of a head 31 and of a stem 32 and is apt to move in opposition to an elastic spring 40. In particular, spring 40 and stem 32 of the slider are housed in the axial hole 26 of the temple bars, where they are intended to slide longitudinally.

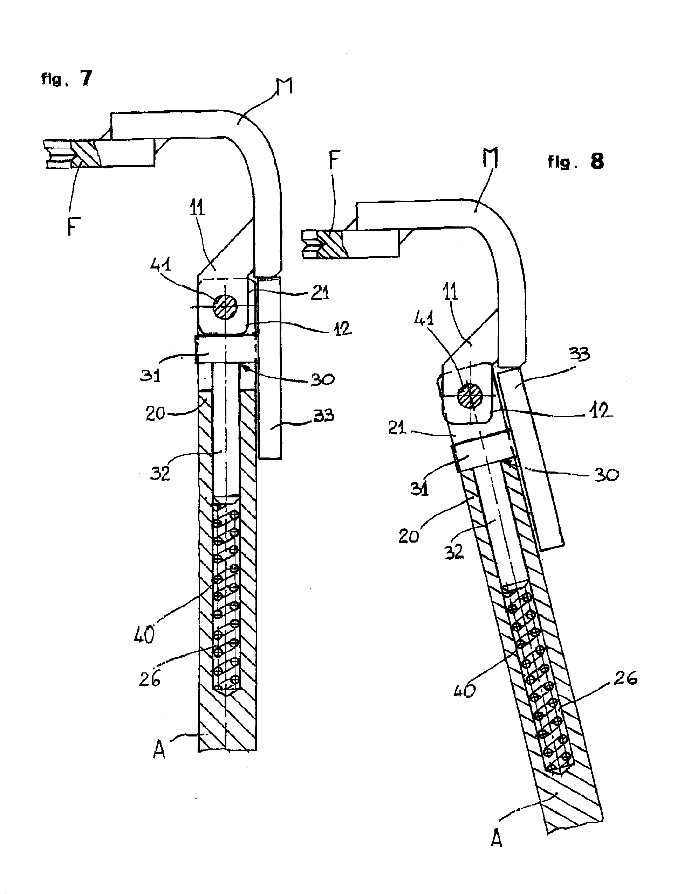

Furthermore, according to the invention, slider head 31 extends to a width, at least in the direction of the external surface (right-hand side in fig. 7) of the temple bar, so that it protrudes by a small amount from temple bar compartment 25 and is equipped with a plate 33 which is intended to slide integrally with the slider on the external side of the temple bar.

As can be understood from figs. 5 to 8, the opposing elastic means are constrained on one side in correspondence of the bottom of axial hole 26 and on the other side by hinge half-portion 11 of the frame frontpiece. In this way spring 40 imparts a continuous elastic bias to slider 30 so as to ensure the desired operation of the elastic hinge.

In order to achieve mounting, i.e. to implement the hinging of forks 21 and 22 of temple bar A with hinge half-portion 11 of frontpiece F, it is necessary to preload elastic spring 40, pushing slider 30 into its housing 25, until the head 31 thereof does not obstruct holes 23 and 24: after that it is possible to mount a threaded pin 41 which keeps all the elements together and makes articulation of the temple bars on the frontpiece possible.

The peripheral profile of hinge half-portion 11 is designed, according to known techniques, so as to obtain the desired opposing elastic action. For example, as is visible in fig. 6, with the temple bar half-open, slider head 31 opposes an edge of hinge half-portion 11, which makes such position unsteady. Conversely, the positions illustrated in figs. 5 and 7 are stable and a certain effort is required in order to overcome the elastic bias of the opposing means and to move the temple bar into a different position.

Consequently, during opening of temple bar A from the position of fig. 5 to the position of fig. 7 and viceversa, since slider head 31 is forced to follow a profile initially increasingly and then decreasingly distant from hinge axis 41, slider 30 is caused to move back and then forward again into compartment 25 which houses it, first against and then along the compression movement and then the release movement of elastic spring 40.

As can be understood, compartment 25 must hence be of such a length as to allow this alternate displacement of slider head 31 during temple bar opening and closing.

By moving slider 30, plate 33 will move also, appearing to perform a sliding movement with respect to temple bar A, highlighting the outer surface thereof and whatever is reproduced therein.

This movement produces a pleasant aesthetic effect on the eye-glasses, particularly if markings or logos visible to the wearer are shown on the plate.

With special reference to figs. 7 and 8, the capability of plate 33 to move, but also another advantageous function of the same is always noticeable.

It can be noticed, in fact, how the plate, aligned with the surface of side support M of frontpiece F and preferably flush therewith, is useful in order to define a limitation of the maximum wide opening of temple bar A.

Since plate 33 begins to rest on the end of side support M, a pivoting effect of the elastic opposing means about such resting point is obtained, which causes a backward movement of slider head 31 as the temple bar is excessively wide open outwards. Such backward movement may continue to the end stop of slider 30 - i.e. when head 31 reaches the bottom of compartment 25: after which, further excessively wide opening of the temple bar is no longer possible.

According to the embodiment illustrated, plate 33 is mounted adhering to the temple bar, but further rotation is possible due to the plate having room for rotation within recess 12.

The preferred embodiment illustrated in fig. 7 provides that, with the temple bar open in the working position, plate 33 is in close proximity with the end of side support M: this depends on how plate 33 is mounted with respect to head 31 of slider 30. However, this is not the only possible solution. In fact, by suitably choosing the length of compartment 25 and the position of plate 33 with respect to slider head 31, it is possible to define the angle of maximum wide opening of temple bar A as desired.

However, it is understood that the invention is not limited to the specific embodiment illustrated above, which represents only a non-limiting example of the scope of the invention, but that a number of variants are possible, all within the reach of a skilled person in the field, without departing from the scope of the invention.

In particular, it is not necessary for the elastic opposition means to be exactly as shown in order to obtain the advantageous effects of the teaching offered here.

By way of example, it is possible to give head 31 of slider 30 a different shape which is any case apt to be associated with plate 33; similarly, the shape of compartment 25 can also be different, for example open on the external side only and not on the internal side of the temple bars.

## Claims

1. Elastic hinge for eye-glasses, of the type comprising elastic opposition means placed between a hinge half-portion integral with eye-glasses frontpiece (F) and a second hinge half-portion integral with an eye-glasses temple bar (A), said elastic opposition means comprising at least one slider (30, 31, 32) sliding within the temple bar, **characterised in that** said slider is integral with a plate (33) arranged on the external side of temple bar (A).

2. Hinge as in claim 1), wherein said plate (33) is integral with a slider head (31) which is slidingly mounted in a compartment (25) of temple bar (A) which compartment is open at least on the external side of temple bar (A).

3. Hinge as in claim 1) or 2), wherein said slider (30) is apt to translate within the temple bar in opposition to elastic means (40).

4. Hinge as in claim 1), 2) or 3), wherein said plate (33) is mounted integral with said slider (30) so that it abuts with an end portion of a side support (M) of frontpiece (F) in a normally open wide condition of the temple bar (A).

5. Hinge as in claim 4), wherein said plate (33) is apt to pivot around said end portion of side support (M) in a first open wide condition of temple bar (A), the further opening wide of the temple bar (A) causing slider (3) to be displaced within the temple bar (A) until it reaches an end stop in a second open wide condition of temple bar (A).

6. Hinge as in claim 4) or 5), wherein said hinge half-portion integral with frontpiece (F) has a recess (12) wherein at least part of said plate (33) is housed even during excessively wide opening of temple bar (A).

7. Eye-glasses comprising a frontpiece (F) and a pair of hinged temple bars (A), **characterised in that** it further comprises a pair of elastic hinges as in any one of the previous claims.
